# EUROPÄISCHE PATENTSCHRIFT

(11) **EP 1 488 374 B1**
(45) Veröffentlichungstag und Bekanntmachung des Hinweises auf die Patenterteilung: **14.09.2005**
(21) Anmeldenummer: 03759910.7
(22) Anmeldetag: 04.06.2003
(51) Int. Cl.: G06K 17/00, B43M 3/04

(54) **VERFAHREN UND VORRICHTUNG ZUM HANDHABEN VON KARTEN**
METHOD AND DEVICE FOR HANDLING CARDS
PROCEDE ET DISPOSITIF POUR MANIPULER DES CARTES

(30) Priorität: 04.06.2002 DE 10224749
(43) Veröffentlichungstag der Anmeldung: 22.12.2004
(73) Patentinhaber: BÖWE SYSTEC AG, 86159 Augsburg (DE)
(72) Erfinder: EICHLER, Rudolf, 86316 Friedberg (DE); DELLES, Martin, 86899 Landsberg am Lech (DE)
(74) Vertreter: Schoppe, Fritz
(86) Internationale Anmeldenummer: PCT/EP2003/005861
(87) Internationale Veröffentlichungsnummer: WO 2003/107262

(56) Entgegenhaltungen:
- WO-A-94/21547
- US-A- 4 194 685
- US-A- 4 644 731
- FINKENZELLER, KLAUS: "RFID-Handbuch" 1998 , HANSER , MÜNCHEN, WIEN XP002257744 ISBN: 3-446-19376-6 Seite 14 -Seite 20

## Beschreibung

Die vorliegende Erfindung bezieht sich auf ein Verfahren und auf eine Vorrichtung zum Handhaben von Karten, insbesondere von Kunststoffkarten, wobei die Kunststoffkarten ein über einen Transponder kontaktfrei auslesbares Speicherelement aufweisen. Insbesondere bezieht sich die vorliegende Erfindung auf ein Verfahren und auf eine Vorrichtung zum Handhaben von solchen Kunststoffkarten, die auf zugeordneten Kartenträgern, die den entsprechenden Kunststoffkarten zugeordnet sind, angebracht sind.

Allgemein können mit bekannten Systemen Kunststoffkarten, wie z. B. dicke Kunststoffkarten vom Typ CR-80, mit Kartenträgern automatisch in variabler Stückzahl verbunden (appliziert) werden. Die mit Kunststoffkarten versehenen Kartenträger werden dann in einer Kuvertierstation in Kuverts verpackt und entweder geschuppt abgelegt oder einer weiteren Verarbeitung zugeführt, wie z. B. dem Sortieren oder dem Einbringen in ein Postkastensystem.

Im Stand der Technik sind verschiedene Verfahren und Vorrichtungen zum Applizieren von Kunststoffkarten auf Kartenträgern bekannt. Aus der DE 195 08 282 C1 und aus der DE 195 33 444 A1 sind Verfahren und Vorrichtungen bekannt, um Kunststoffkarten und Kartenträger unter Verwendung einer Druckauftragsnummer zusammenzuführen und zu verbinden. Nach dem Zusammenführen und Verbinden werden auch hier die Kartenträger kuvertiert und einer weiteren Verarbeitung zugeführt. Aus der DE 197 25 579 A1 ist ein ähnliches Verfahren bekannt, bei dem die Zusammenführung und Verbindung von Kunststoffkarte und Kartenträger unter Verwendung einer Prüfsumme verifiziert wird. Aus der DE 197 34 483 A1 ist ein Verfahren und eine Vorrichtung zum Zusammenführen und Verbinden von Kunststoffkarten und Kartenträgern unter Verwendung einer Druckauftragsnummer bekannt, wobei die Verarbeitung off-line erfolgt. Bei den oben genannten bekannten Verfahren handelt es sich um die Verbindung von Kartenträgern und Kunststoffkarten, wobei die Kunststoffkarten einen Magnetstreifen aufweisen, der durch eine Leseeinrichtung, welche einen Kontakt zwischen den Kunststoffkarten und der Leseeinrichtung herstellt, ausgelesen werden kann.

Der Nachteil der gerade beschriebenen Verfahren besteht darin, dass nach dem Zusammenführen und Verbinden (Applizieren) von Kunststoffkarte und Kartenträger eine Kuvertierung derselben erfolgt, also der Kartenträger, gegebenenfalls nach einer Falzung, in ein Kuvert eingebracht wird. Befindet sich der Kartenträger in dem Kuvert, so ist derselbe darin derart angeordnet, dass die darauf angebrachte Kunststoffkarte von außen nicht mehr sichtbar ist, so dass nach dem Kuvertieren des Kuvertträgers keine Kontrolle mehr dahingehend stattfinden kann, inwieweit eine Kunststoffkarte in dem geschlossenen Kuvert enthalten ist oder nicht.

Im Stand der Technik sind ferner Verfahren und Vorrichtungen bekannt, bei denen Gegenstände mit einem Strichcode versehen werden, der während der Handhabung der Gegenstände durch einen optischen Leser erfasst wird. Beispielhaft sei hier auf die DE 40 11 994 A1, die DE 196 16 130 A1 und die DE 196 20 697 A1 verwiesen. Bei diesem bekannten Verfahren wird jeweils ein Strichcode auf einer äußeren Oberfläche eines Gegenstands angebracht, so dass diese von einem optischen Lesegerät gelesen werden kann. Alternativ wird der Strichcode so angebracht, dass dieser innerhalb eines Kuverts angeordnet ist und durch ein Fenster in dem Kuvert ausgelesen werden kann.

Die Probleme mit den oben genannten Verfahren und Vorrichtungen zum Zusammenführen und Verbinden von Kunststoffkarten können diese Ansätze nicht lösen, da die Kunststoffkarte nach dem Kuvertieren in dem Kuvert derart angeordnet ist, dass diese von außen nicht sichtbar ist.

Die oben beschriebenen Verfahren und Vorrichtungen haben ferner den Nachteil, dass eine Nachverfolgung der Kunststoffkarte in dem Handhabungssystem nicht möglich ist. Einem Betreiber ist zwar bekannt, wie viele Karten und welche Karten in das System eingebracht wurden, jedoch kann am Ende/Ausgang des Systems nur mit hohem Aufwand - wenn überhaupt - verifiziert werden, ob alle Kunststoffkarten, die in das System eingebracht wurden auch tatsächlich aus demselben entfernt wurden. Während des Betriebs ist ein Betreiber auf die Zuverlässigkeit des verwendeten System angewiesen, da dem Betreiber keine Möglichkeit gegeben ist, die Kunststoffkarten bei deren Verarbeitung in dem System nachzuverfolgen. Diese Situation ist insbesondere bei der Verarbeitung von sicherheitssensiblen Kunststoffkarten, z.B. Kreditkarten etc., nachteilig und ermöglicht es einem Betreiber nur mit hohem Aufwand die erforderlichen Sicherheitsbedingungen zu erfüllen.

Der vorliegenden Erfindung liegt somit die Aufgabe zugrunde, ein Verfahren und eine Vorrichtung zu schaffen, welche es erlauben, eine Kunststoffkarte bei deren Verarbeitung nachzuverfolgen.

Diese Aufgabe wird durch ein Verfahren gemäß Anspruch 1 und durch eine Vorrichtung gemäß Anspruch 19 gelöst.

Die vorliegende Erfindung schafft ein Verfahren zum Handhaben von Karten, wobei die Karte ein über einen Transponder kontaktfrei auslesbares Speicherelement aufweisen und eine Mehrzahl von Handhabungsstationen durchlaufen, mit folgenden Schritten:
(a) Zusammenführen und Verbinden einer Karte und eines Kartenträgers;
(b) Kuvertieren des Kartenträgers; und
(c) Durchführen einer Leseoperation bezüglich des im Schritt (b) kuvertierten Kartenträgers, um basierend auf einem von dem kuvertierten Kartenträger empfangenen Signal zu bestimmen, ob in dem Kuvert eine Karte enthalten ist.

Die vorliegende Erfindung schafft eine Vorrichtung zum Handhaben von Karten mit einer Mehrzahl von Handhabungsstationen, die die Karten durchlaufen, wobei die Karten ein über einen Transponder kontaktfrei auslesbares Speicherelement aufweisen, mit
einer Appliziereinrichtung, um eine Karte und einen Kartenträger zusammenzuführen, zu verbinden und auszugeben;
einer Einrichtung, um den Kartenträger zu kuvertieren;
einer Leseeinrichtung, um eine Leseoperation bezüglich des kuvertierten Kartenträgers durchzuführen; und
einer Steuerungseinrichtung, die basierend auf einem von dem kuvertierten Kartenträger empfangenen Signal bestimmt, ob in dem Kuvert eine Karte enthalten ist.

Vorzugsweise ist die Karte eine Kunststoffkarte.

Das Kuvertieren umfasst das Einbringen des Kartenträgers in ein Kuvert oder das Falzen des Kartenträgers und das Verschweißen desselben an dessen Rändern. Das Kuvert ist ein fensterloses Kuvert, das mit erforderlichen Informationen zum Versand versehen ist oder mir diesen Informationen nach dem Einbringen der Kunststoffkarte noch versehen wird. Alternativ hat das Kuvert ein Fenster.

Gemäß einem bevorzugten Ausführungsbeispiel der vorliegenden Erfindung wird lediglich das Vorhandensein oder das Nichtvorhandensein einer Kunststoffkarte in dem Kuvert bestimmt, unabhängig von dem Ergebnis der Leseoperation wird ein Signal erzeugt, welches anzeigt, dass Informationen von der Kunststoffkarte empfangen wurden oder nicht, so dass abhängig von dem Signal eine weitere Steuerung erfolgen kann, welche bewirkt, dass das Kuvert entweder an eine weitere Station zur weiteren Handhabung desselben weitergeleitet wird, falls die Leseoperation ergeben hat, dass Informationen von dem Speicherelement empfangen wurden. Alternativ, wenn keine Informationen von der Leseeinrichtung empfangen wurden, wird das Kuvert aus dem weiteren Handhabungsprozess entfernt.

Gemäß einem anderen bevorzugten Ausführungsbeispiel der vorliegenden Erfindung wird zusätzlich zu der quantitativen Prüfung, also ob die Karte vorhanden ist oder nicht vorhanden ist, zusätzlich eine qualitative Prüfung durchgeführt. Bei diesem Ausführungsbeispiel werden aus der Karte vorbestimmte Informationen, wie beispielsweise Adressinformationen, ausgelesen, die dann mit entsprechenden Informationen, die dem Kartenträger zugeordnet sind, verglichen werden. Die dem Kartenträger zugeordneten Informationen können beispielsweise durch eine OCR-Lesung (OCR = Optical Character Recognition = optische Zeichenerfassung) bedruckten Kuverts oder des bedruckten Kartenträgers durch das Kuvertfenster erhalten werden. Durch diese OCR-Lesung werden die dem Kartenträger zugeordneten Adressinformationen ausgelesen. Alternativ können die in der Gesamtanlage enthaltenen Daten beispielsweise aus einer Datenbank ausgelesen werden, um die dem jeweiligen Kartenträger zugeordneten Informationen mit den durch die Leseeinrichtung erhaltenen Kartendaten zu vergleichen.

Gemäß einem weiteren Ausführungsbeispiel der vorliegenden Erfindung wird zusätzlich durch die Leseeinrichtung erfasst, welche Kunststoffkarten kuvertiert wurden, und auf der Grundlage dieser Informationen wird ein entsprechender Bericht erzeugt, um so zu dokumentieren, welche Karten bereits kuvertiert wurden und welche noch nicht.

Die erfindungsgemäß verwendeten Kunststoffkarten umfassen eine integrierte Antenne und einen Kartenchip. Die Leseeinrichtung ist ausgebildet, um diese Karten anzusprechen, und induziert ein Wechselfeld, welches über die in der Karte integrierte Antenne eine Spannung zur Versorgung des Kartenchips erzeugt. Hierdurch kann über einen bestimmten Frequenzbereich ein Datenaustausch zwischen der Leseeinrichtung und dem Kartenchip erfolgen.

Der Vorteil der vorliegenden Erfindung besteht darin, dass diese erstmals die Möglichkeit eröffnet, auch nach dem Kuvertieren des Kartenträgers zu erfassen, ob eine Kunststoffkarte in dem Kuvert enthalten ist.

Ein weiterer Vorteil der vorliegenden Erfindung besteht darin, dass zusätzlich zu der Leseeinrichtung nach der Kuvertiereinrichtung auch noch andere Leseeinrichtungen an anderen Stationen der Anlage vorgesehen sein können, um so die Kunststoffkarte während des gesamten Prozesses zu verfolgen, so dass der Weg der Kunststoffkarte vom Eintritt in die Anlage bis zum Verlassen derselben sicher nachverfolgt werden kann.

Erfindungsgemäß kann somit die Sicherheit bei der Handhabung der Kunststoffkarten gegenüber bekannten Systemen noch weiter erhöht werden, da nunmehr eine nochmalige Prüfung am Ende der Anlage durchgeführt wird, ob tatsächlich eine Kunststoffkarte in dem Kuvert enthalten ist. Gegebenenfalls kann eine weitergehende Überprüfung dahingehend durchgeführt werden, ob die enthaltene Kunststoffkarte tatsächlich auch zu dem entsprechenden Kartenträger, mit dem diese zusammen kuvertiert wurde, gehört. Dies stellt nochmals sicher, dass keine Karten an unberechtigte Dritte versandt werden, so dass die Sicherheit der Kartenhandhabung nochmals erhöht ist. Ferner lässt sich nunmehr genau darlegen, welche Karten in die Anlage eingebracht wurden und welche Karten aus der Anlage ausgefahren wurden, so dass ein Verlust einer Karte oder mehrerer Karten in der Anlage sicher detektiert werden kann.

Bevorzugte Weiterbildungen der vorliegenden Anmeldung sind in den Unteransprüchen definiert.

Bevorzugte Ausführungsbeispiele der vorliegenden Erfindung werden nachfolgend Bezug nehmend auf die beiliegenden Zeichnungen näher erläutert. Es zeigen:
- Fig. 1: einen ersten Abschnitt des erfindungsgemäßen Verfahrens;
- Fig. 2: einen zweiten Abschnitt des erfindungsgemäßen Verfahrens gemäß einem ersten Ausführungsbeispiel;
- Fig. 3: einen zweiten Abschnitt des erfindungsgemäßen Verfahrens gemäß einem zweiten Ausführungsbeispiel; und
- Fig. 4: ein Ausführungsbeispiel der erfindungsgemäßen Vorrichtung.

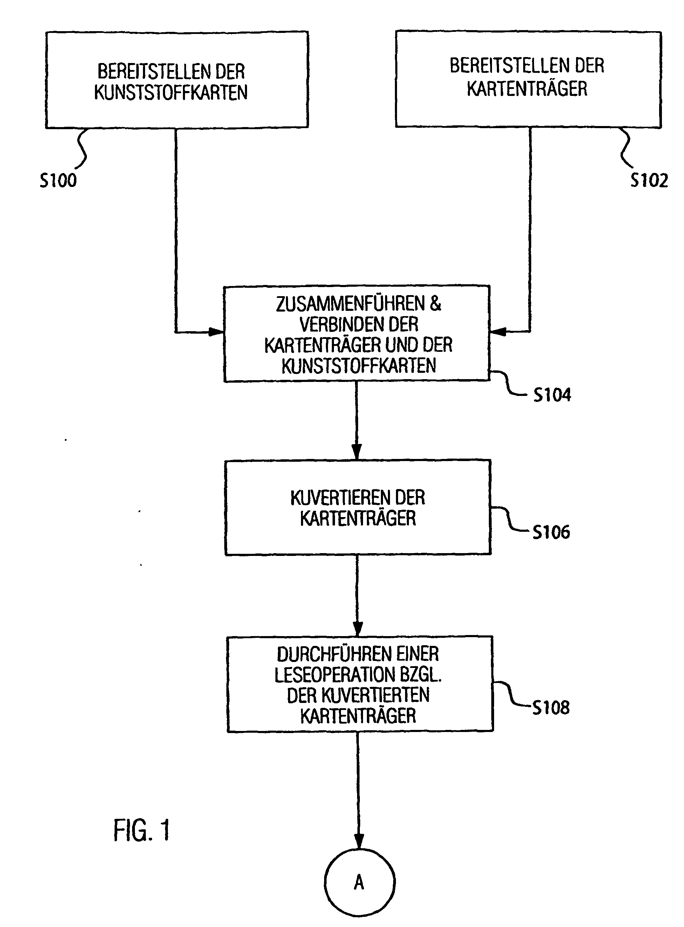

Anhand der Fig. 1 wird nun ein erster Abschnitt des erfindungsgemäßen Verfahrens näher erläutert. In einem ersten Schritt S100 werden zunächst die durch eine entsprechende Anlage zu verarbeitenden Kunststoffkarten bereitgestellt. Die Kunststoffkarten umfassen ein Speicherelement, beispielsweise in der Form eines Kartenchips, wobei das Speicherelement über einen Transponder kontaktfrei auslesbar ist. Hierzu wird eine spezifische Leseeinrichtung vorgesehen, welche die Karten anspricht und in einer in der Karte integrierten Antenne ein Wechselfeld induziert, um eine Spannung zur Versorgung des Kartenchips zu erzeugen. Dies ermöglicht den Datenaustausch in einem bestimmten Frequenzbereich zwischen der Leseeinrichtung und dem Kartenchip.

In einem weiteren Schritt S102 werden die Kartenträger bereitgestellt, auf die die im Schritt S100 bereitgestellten Kunststoffkarten zu applizieren sind. Bei den Kartenträgern handelt es sich im Regelfall um Anschreiben an die Inhaber der Kunststoffkarten, mit denen die neuen Kunststoffkarten an die Inhaber übersandt werden. Die Kartenträger enthalten hierzu ein entsprechendes Adressfeld, um den postalischen Versand des kuvertierten Kartenträgers mit den Kunststoffkarten zu ermöglichen.

Hinsichtlich des erfindungsgemäßen Verfahrens ist festzuhalten, dass dieses sowohl für den Online-Betrieb als auch für den Off-line-Betrieb einer Kartenhandhabungsanlage geeignet ist. Im Online-Betrieb werden die Kartenträger durch die Handhabungsanlage selbst erzeugt, also beispielsweise durch einen Laserdrucker mit den erforderlichen Daten, welche durch eine Datenbank der Anlage bereitgestellt werden, versehen und anschließend der Appliziereinrichtung zugeführt. Im Off-line-Betrieb werden die Kartenträger bereits vorab bedruckt und personalisiert und anschließend in einer vorbestimmten Reihenfolge der Anlage zur Handhabung bereitgestellt. Die Kunststoffkarten werden im Online-Betrieb der Anlage bereitgestellt und auf der Grundlage der Informationen, welche von den Kunststoffkarten erhalten werden können, kann auf eine Datenbank zugegriffen werden, um eine entsprechende Erzeugung eines Kartenträgers durch den Laserdrucker zu bewirken. Im Off-line-Betrieb werden die Karten, ebenso wie die Kartenträger, in entsprechend vorsortierter Form der Anlage bereitgestellt. Die gerade beschriebenen Betriebsmodi sind in der DE 195 08 282 C1, DE 195 33 444 Al, DE 197 25 579 A1 und DE 197 34 483 A1 näher beschrieben.

In einem nachfolgenden Schritt S104 werden die Kunststoffkarten und die Kartenträger zusammengeführt und verbunden (appliziert), wobei vor dem Applizieren einer Kunststoffkarte und eines Kartenträgers noch die Übereinstimmung der beiden Gegenstände auf die in den oben beschriebenen Dokumenten näher erläuterte Art und Weise erfolgt. Abhängig von der Anzahl der zu übersendenden Karten an einen Karteninhaber können auf einem Kartenträger eine oder mehrere Kunststoffkarten appliziert werden.

Nach dem Applizieren erfolgt im Schritt S106 das Kuvertieren der Kartenträger und die kuvertierten Kartenträger werden nachfolgend einer Leseeinrichtung zugeführt, so dass im Schritt S108 eine Leseoperation bezüglich der kuvertierten Kartenträger durchgeführt wird. Abhängig vom Ergebnis dieser Leseoperation kann erkannt werden, ob eine Kunststoffkarte in dem Kuvert enthalten ist oder nicht.

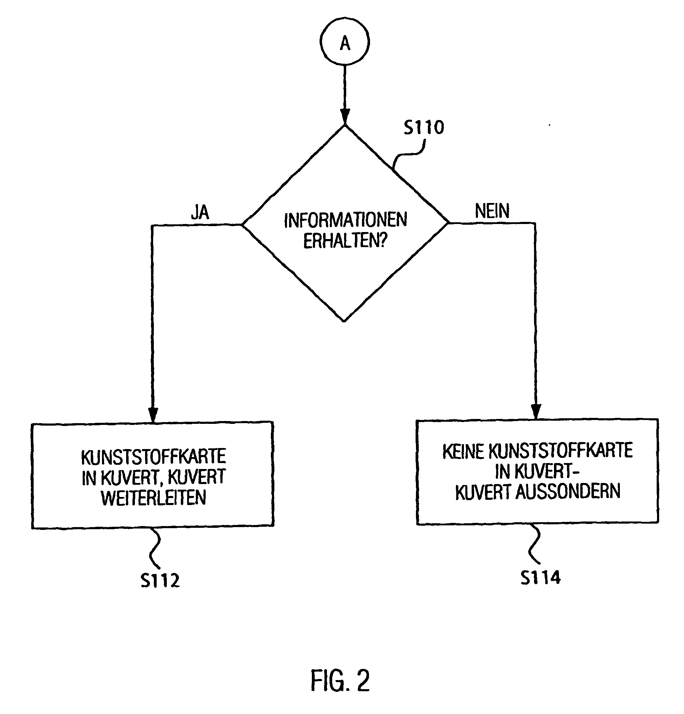

Anhand der Fig. 2 wird ein erstes Ausführungsbeispiel der vorliegenden Erfindung näher erläutert. Nach dem Durchführen der Leseoperation im Schritt S108 wird im Schritt S110 abgefragt, ob durch die Leseoperation Informationen erhalten wurden.

Ist dies zutreffend, so wird im Schritt S112 bestimmt, dass sich eine Kunststoffkarte in dem Kuvert befindet, und das Kuvert wird in der Anlage zur Weiterverarbeitung weitergeleitet. Wird im Schritt S110 festgestellt, dass keine Informationen erhalten wurden, so wird im Schritt S114 festgestellt, dass keine Kunststoffkarte in dem Kuvert enthalten ist, und das Kuvert wird aus der Anlage bzw. aus dem Handhabungsprozess ausgesondert.

Hinsichtlich der im Schritt S110 durchgeführten Überprüfung, ob Informationen erhalten wurden, ist festzuhalten, dass es hierbei verschiedene Möglichkeiten gibt. Die einfachste Möglichkeit besteht darin, einfach zu überprüfen, ob irgendwelche Informationen (Signale) von dem Kuvert erhalten wurden, um bei Vorliegen der Informationen zu bestimmen, dass eine Karte in dem Kuvert enthalten ist, und um bei Nichtvorliegen von Informationen zu bestimmen, dass keine Karte enthalten ist.

Alternativ kann anstelle der einfachen Abfrage, ob überhaupt Informationen erhalten wurden, vorgesehen sein, dass vorbestimmte Informationen von der Karte ausgelesen werden, welche dann von der Leseeinrichtung empfangen werden müssen, um das Vorhandensein oder Nichtvorhandensein einer Kunststoffkarte zu beurteilen. Werden diese Informationen nicht erhalten oder werden Daten erhalten, die nicht diesen Informationen entsprechen, so kann hieraus darauf geschlossen werden, dass entweder keine Kunststoffkarte in dem Kuvert ist oder dass sich eine fehlerhafte Kunststoffkarte in dem Kuvert befindet, welche dann ebenfalls auszusondern ist. Die auszulesenden Informationen können beispielsweise eine in der Kunststoffkarte gespeicherte Identifikationsmarkierung sein. Wird diese herangezogen, so besteht zusätzlich zum Auslesen der Informationen und zum Bestimmen, ob eine Kunststoffkarte enthalten ist oder nicht, die Möglichkeit, in einem Speicher die so gelesenen Informationen abzulegen, um einen Bericht zu erzeugen, der wiedergibt, welche Kunststoffkarten in der Anlage verarbeitet wurden.

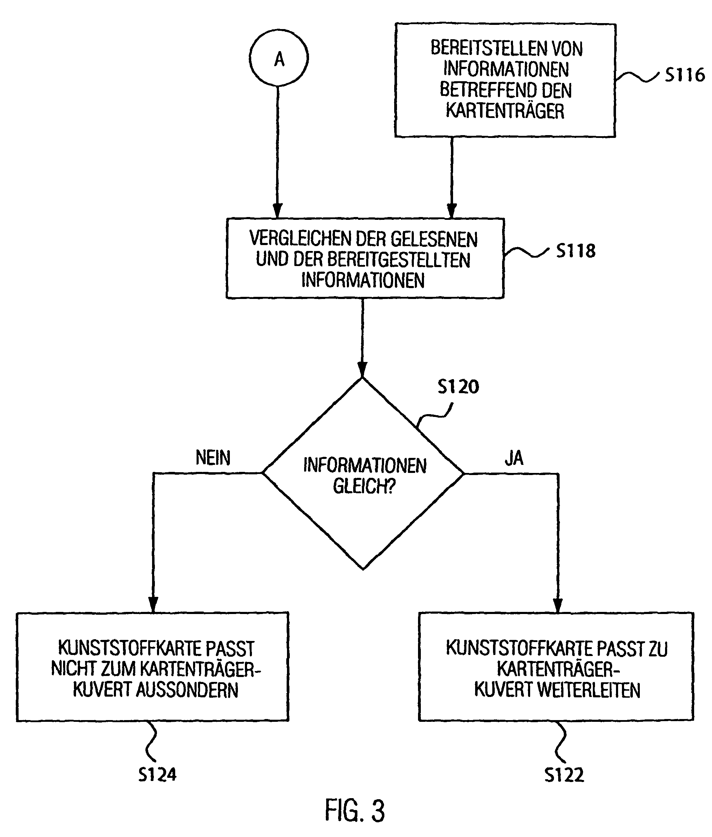

Anhand der Fig. 3 wird nachfolgend ein zweites Ausführungsbeispiel des erfindungsgemäßen Verfahrens näher erläutert. Zusätzlich zum Durchführen einer Leseoperation im Schritt S110 werden hier im Schritt S116 weitere Informationen bereitgestellt, welche jedoch diesmal den Kartenträger betreffen. Bei diesen Informationen kann es sich beispielsweise um Adressinformationen handeln, welche mittels einer OCR-Lesung von dem Kartenträger erhalten werden. Nachdem sich der Kartenträger in dem Kuvert befindet, erfolgt die OCR-Lesung durch das Kuvertfenster. Alternativ können die den Kartenträger betreffenden Daten von der Anlage, beispielsweise aus einer Datenbank derselben, bereitgestellt werden, wobei in diesem Fall sicherzustellen ist, dass die Anlage "weiß", welcher Kartenträger gerade kuvertiert wurde.

Im Schritt S118 werden die durch die Leseoperation im Schritt S108 erhaltenen Daten und die im Schritt S116 bereitgestellten Daten miteinander verglichen. Im Schritt S120 wird festgestellt, auf der Grundlage des Vergleichs im Schritt S118, ob die Informationen gleich sind oder nicht. Sind die Informationen gleich, so wird im Schritt S122 festgestellt, dass Kunststoffkarte und Kartenträger zusammenpassen, und das Kuvert, in dem sich dieselben befinden, wird einer weiteren Verarbeitung weitergeleitet. Wird im Schritt S120 festgestellt, dass die Informationen nicht gleich sind, so wird im nachfolgenden Schritt S124 festgestellt, dass die Kunststoffkarte und der Kartenträger nicht zusammenpassen, und das Kuvert, welches diese Kombination enthält, wird aus der Anlage ausgesondert.

Ähnlich wie bei dem oben anhand der Fig. 2 beschriebenen ersten Ausführungsbeispiel kann auch hier zusätzlich zur Aussonderung von nicht übereinstimmenden Kunststoffkarten/Kartenträger-Paaren eine Aussonderung von fehlerhaften Kunststoffkarten durchgeführt werden, wobei eine Fehlerhaftigkeit der Kunststoffkarten dadurch erfasst wird, dass fehlerhaft wiedergegebene Daten ebenfalls zu einem negativen Vergleich mit den Daten von dem Kartenträger führen würden.

Bei den oben beschriebenen Ausführungsbeispielen erzeugt die Leseeinrichtung, welche den Schritt des Lesens S108 durchführt, vorzugsweise verschiedene Signale, welche anzeigen, ob Informationen erhalten wurden oder ob keine Informationen erhalten wurden. Auf der Grundlage dieser Signale wird dann im ersten Ausführungsbeispiel im Schritt S110 bestimmt, ob von der Kunststoffkarte in dem Kuvert ein Signal ausgegangen ist oder nicht.

Bei den oben beschriebenen Ausführungsbeispielen des erfindungsgemäßen Verfahrens ist es zusätzlich möglich, dass weitere Leseoperationen durchgeführt werden, um die Prozessierung einer Kunststoffkarte während des Gesamtverfahrens zu überwachen. Hierzu kann beispielsweise nach dem Schritt S100 ein entsprechender Leseschritt eingefügt werden, um zu erfassen, welche Kunststoffkarten in die Anlage eintreten.

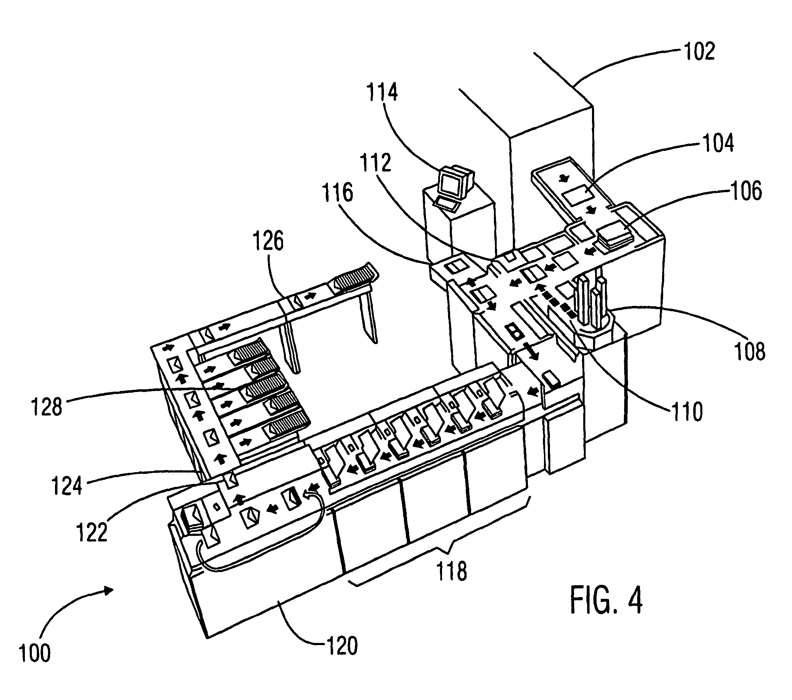

Anhand der Fig. 4 wird nachfolgend ein Ausführungsbeispiel einer erfindungsgemäßen Vorrichtung näher erläutert. Fig. 4 zeigt eine Anlage 100, mittels der Kunststoffkarten auf Kartenträger aufgebracht werden, kuvertiert werden und zum Versand bereitgestellt werden. Bei dem in Fig. 4 dargestellten Ausführungsbeispiel handelt es sich um eine Online-Anlage, d. h. eine Anlage, die die Kartenträger selbst personalisiert.

Die Anlage 100 umfasst einen schematisch dargestellten Drucker 102, beispielsweise einen Laserdrucker. Der Laserdrucker 102 gibt bedruckte Kartenträger 104 an ein Puffermagazin 106 aus. Das Magazin 106 kann eine vorbestimmte Anzahl von vorbedruckten Kartenträgern 104 enthalten, wobei der Laserdrucker die Kartenträger 104 zu einer Oberseite des Magazins 106 zuführt, und wobei Kartenträger für die Weiterverarbeitung von einer Unterseite des Magazins 106 abgezogen werden. Dies ermöglicht eine Entkopplung der Verarbeitungsgeschwindigkeiten des Laserdruckers 102 und der nachgeschalteten Stationen der Anlage 100. Die Anlage 100 umfasst ferner mehrere Kartentürme 108, in denen die Kunststoffkarten gehalten sind. Von den Kartentürmen 108 werden die Kunststoffkarten 110 in Richtung eines Applizierers 112 bewegt, zu dem auch die von dem Magazin 106 ausgefahrenen Kartenträger 104 bewegt werden. Im Applizierer 112 werden die Kunststoffkarten 110 mit den Trägern 104 verbunden, wobei abhängig von der Anzahl der zu versendenden Karten eine oder mehrere Kunststoffkarten auf einen Träger aufgebracht werden. Die Karten werden beispielsweise mittels Klebeetiketten auf dem Träger befestigt.

Abhängig von der Ausgestaltung der Anlage 100 kann zwischen den Kartentürmen 108 und der Applizierer 112 eine Leseeinrichtung (nicht gezeigt) vorgesehen sein, welche Informationen von der Kunststoffkarte ausliest (kontaktfrei). Auf der Grundlage der erfassten Informationen wird auf eine Datenbank 114 zugegriffen, um von derselben die Druckdaten zum Bedrucken der Kartenträger 104 an den Drucker 102 weiterzugeben.

Alternativ kann auf die weitere Leseeinrichtung zwischen den Türmen 108 und dem Applizierer 112 verzichtet werden, wenn die Kunststoffkarten in einer Reihenfolge bereitgestellt werden, die einer Reihenfolge entspricht, wie die Kartenträger durch den Drucker 102 und der Steuerung der Datenbank 114 erzeugt werden.

Zusätzlich kann bei der Anlage 100 vorgesehen sein, dass vor dem Applizieren im Applizierer 112 eine Überprüfung der Übereinstimmung von zusammenzuführenden Karten und Kartenträgern durchgeführt wird, auf eine der in den oben genannten Dokumenten im Stand der Technik beschriebenen Arten. Wird herausgefunden, dass die Elemente nicht übereinstimmen, so werden diese zu einer Auswurfstation 116 nach dem Applizierer 112 ausgefahren. Zusammenpassende Karten und Kartenträger werden in Richtung der Beilagenanleger 118 bewegt, wobei die Kartenträger auf dem Weg zu den Beilagenanlegern noch einer Falzung unterworfen werden.

In den Beilagenanlegern 118 werden optional weitere Beilagen dem Kartenträger beigefügt, bevor dieser einem Kuvertierer 120 zugeführt wird, in dem der Kartenträger, gegebenenfalls mit den weiteren Beilagen, kuvertiert wird. Die gefüllten Kuverts 122 werden aus dem Kuvertierer 120 ausgefahren und einer Leseeinrichtung 124 zugeführt, welche die Kunststoffkarte anspricht, um Informationen von derselben auszulesen.

Abhängig von den Ergebnissen der Leseoperation, die durch die Leseeinrichtung 124 durchgeführt wurde, ist die Steuerung der Anlage 100 gemäß den oben beschriebenen bevorzugten Ausführungsbeispielen der vorliegenden Anmeldung wirksam, um ein Kuvert 124 entweder auszusondern oder einer Weiterverarbeitung zuzuführen. Wird festgestellt, dass in dem Kuvert 124 keine oder eine fehlerhafte Kunststoffkarte enthalten ist, so wird dieses ausgesondert und auf einer entsprechenden Ablage 126 abgelegt. Wird festgestellt, dass Kunststoffkarten enthalten sind bzw. die Kunststoffkarten mit dem Kartenträger zusammenpassen, so wird das entsprechende Kuvert abhängig vom Ort, an den dasselbe zu versenden ist, entsprechenden Ablagen 128 abgelegt.

Hinsichtlich des anhand der Fig. 4 beschriebenen beispielhaften Systems wird darauf hingewiesen, dass es sich hierbei lediglich um ein bevorzugtes Ausführungsbeispiel handelt und dass das erfindungsgemäße Verfahren und die erfindungsgemäße Vorrichtung auch auf andere Arten implementiert werden kann. Insbesondere ist die Erfindung nicht auf eine Anlage im Online-Betrieb beschränkt, sondern ist ebenfalls auf Anlagen im Off-line-Betrieb anwendbar. Ferner ist die vorliegende Erfindung nicht auf die in Fig. 100 dargestellte Konfiguration des Systems beschränkt, sondern andere Systemkomponenten können vorgesehen sein oder einige der Systemkomponenten, wie beispielsweise die Beilagenanleger, können in verminderter Zahl oder gar nicht vorgesehen sein.

Zusätzlich zu der Leseeinrichtung 124 können weitere Leseeinrichtungen vorgesehen sein, um eine Kunststoffkarte während des Durchlaufens der Anlage 100 zu überwachen. So kann beispielsweise am Ausgang der Kartentürme 108 eine Leseeinrichtung vorgesehen sein, um den Eintritt einer Kunststoffkarte in die Anlage 100 zu erfassen. Ferner kann vor der Auswurfstelle 116 eine entsprechende Leseeinrichtung vorgesehen sein, um zu erkennen, wenn eine Kunststoffkarte aus der Anlage aufgrund fehlender Übereinstimmung mit dem Kartenträger ausgesondert wird.

Für einen Fachmann ist es offensichtlich, dass auch an anderer Stelle noch weitere Leseeinrichtungen zum Erfassen der Kunststoffkarte an einer entsprechenden Position der Anlage 100 vorgesehen sein können.

Obwohl oben die bevorzugten Ausführungsbeispiele vorwiegend anhand von Systemen beschrieben wurden, die nur eine Kunststoffkarte kuvertierten, ist es offensichtlich, dass das erfindungsgemäße Konzept auch auf mehrere Kunststoffkarten, die einem Träger zugeordnet werden, anwendbar ist. In diesem Fall erhält man Informationen von der Mehrzahl der Kartenträger beim Lesen derselben, um so festzustellen, wie viele und ggf. welche Kunststoffkarten vorliegen.

Die obigen Ausführungsbeispiele wurden anhand von Kuverts beschrieben, die ein Fenster aufweisen, durch das die Adressinformationen auf dem Kartenträger sichtbar sind. Alternativ kann auch ein geschlossenes Kuvert (ohne Fenster) verwendet werden, auf das die Adressinformationen aufgedruckt sind. Bei einem anderen Ausführungsbeispiel umfasst das Kuvertieren das Falzen des Kartenträgers und das Verschweißen desselben an dessen Rändern, so dass durch den gefalzten Kartenträger bereits die zu verschickende Sendung gebildet ist.

Bei einem weiteren Ausführungsbeispiel kann vorgesehen sein, anstelle der bereits bedruckten Kuverts (ohne Fenster) zunächst unbedruckte Kuverts zu verwenden. Nach dem Kuvertieren wird dann das Kuvert bzw. der gefalzte und verschweißte Kartenträger mit Informationen bedruckt, die aufgrund von Informationen, die aus der Kunststoffkarte ausgelesen wurden, erhalten wurden. In diesem Fall ist die Leseeinrichtung vorgesehen, um eine vorbestimmte Informationen von dem Speicherelement der Kunststoffkarte zu lesen, die dann mittels eines Druckers aufgedruckt werden. Die für den Druck bereitgestellten Informationen können zum Beispiel die für den Versand des Kartenträgers erforderlichen Adressinformationen, oder auch andere, ggf. zusätzlich zu den bereits aufgedruckten Adressinformationen dem Empfänger zugeordnete Informationen oder vorbestimmte Werbeinformationen umfassen. Die Informationen können auf der Kunststoffkarte gespeichert sein, oder, alternativ, eine Identifikationsmarkierung der Kunststoffkarte umfassen, mit der auf eine Datenbank zugegriffen wird, in der die Informationen gespeichert sind.

Die vorliegende Erfindung ist nicht auf die oben beschrieben Ausführungsbeispiele betreffend die Lesung von kuvertierten Kunststoffkarten beschränkt. Tatsächlich ermögliche die vorliegende Erfindung in der breitesten Implementierung die Verfolgung von Kunststoffkarten in einem Handhabungssystem für Kunststoffkarten, wie es z.B. anhand der Fig. 4 beschrieben wurde. Die dort bereits beschriebenen Leseeinrichtungen können zusätzlich zu den beschrieben Funktionen verwendet werden, um die Position einer Kunststoffkarten in dem System zu erfassen und zu protokollieren, so dass durch das Protokoll der Durchlauf der Kunststoffkarte durch das System erfasst wird. Alternativ oder zusätzlich können weitere Leseeinrichtungen an oder zwischen den Handhabungsstationen (Auswurfstation 116, Beilagenanleger 118, Kuvertierer 120, Ablagen 126, 128 - siehe Fig. 4). Für einen Fachmann ist es offensichtlich, dass basierend auf der spezifischen Konfiguration des Systems andere oder zusätzliche Handhabungsvorrichtungen vorgesehen sein können, an oder zwischen denen ebenfalls Leseeinrichtungen zum Durchführen einer Leseoperation bezüglich einer Kunststoffkarte vorgesehen sein können.

Bei einem alternativen Ausführungsbeispiel kann auf das Kuvertieren der Kartenträger mit den Kunststoffkarten verzichtet werden. In diesem Fall werden Kunststoffkarte und eines Kartenträgers nur zusammengeführt und verbunden und anschließend, ggf. nach Durchlauf weiterer Handhabungsstationen, ohne Kuvertieren ausgegeben. Die kann dann erwünscht sein, wenn Kunststoffkarte und Kartenträger nur an Zwischenhändler verschickt werden.

Eine der weiteren, ggf. vorgesehenen Handhabungsstationen kann z.B. ein Falzwerk umfassen.

Obwohl oben bevorzugte Ausführungsbeispiele der vorliegenden Erfindung anhand des Beispiels einer Kunststoffkarte und eines Kartenträgres beschrieben wurden, ist darauf hinzuweisen, dass die vorliegende Erfindung nicht hierauf beschränkt ist. Vielmehr findet die vorliegende Erfindung allgemein Anwendung bei der Zusammenführung und Verbindung von Karten und Kartenträgern.

Soweit die vorliegende Erfindung Karten betrifft, ist hierunter vorzugsweise eine Kunststoffkarte (z.B. CR-80) zu verstehen, wie sie heute z.B. bei Kreditkarten oder ähnlichem eingesetzt wird. Die vorliegende Erfindung ist jedoch nicht auf solche Kunststoffkarten beschränkt. Tatsächlich können beliebige Karten gehandhabt werden, wobei "Karte" im Sinne der vorliegenden Erfindung nicht nur Kunststoffkarten bedeutet, sondern auch andere Karten oder kartenähnliche Elemente oder Datenträger umfasst, z.B. Mini-Disks oder Mini-CDs, SIMM-Karten, Präsente oder andere Beigaben, die zusammen mit einem Anschreiben verarbeitet und gemeinsam an einen Empfänger zu versenden sind. Bei einem bevorzugten Ausführungsbeispiel werden die Kunststoffkarten mit der Post versandt und umfassen unter anderem Kreditkarten, Krankenversicherungskarten, Führerscheine und Personalausweise, Treuekarten, wie z. B. Miles & More, etc.

Zusätzlich zu den Karten können auch das Kuvert und/oder der Kartenträger ein durch einen Transponder auslesbares Speichermedium aufweist. Dies ermöglicht es, vor dem Einbringen der Karte in das Kuvert bzw. vor dem Aufbringen der Karte auf den Kartenträger die Speichermedien des Kuverts bzw. des Kartenträgers und der Karte ausgelesen werden, um zu bestimmen, ob das Kuvert bzw. der Kartenträger und die Karte zusammengehören.

## Patentansprüche

1. Verfahren zum Handhaben von Karten, wobei die Karten ein über einen Transponder kontaktfrei auslesbares Speicherelement aufweisen und eine Mehrzahl von Handhabungsstationen durchlaufen, mit folgenden Schritten:
(a) Zusammenführen und Verbinden (S104) einer Karte (110) und eines Kartenträgers (104);
(b) Kuvertieren (S106) des Kartenträgers (122); und
(c) Durchführen (S108) einer Leseoperation bezüglich des im Schritt (b) kuvertierten Kartenträgers, um basierend auf einem von dem kuvertierten Kartenträger empfangenen Signal zu bestimmen, ob in dem Kuvert (122) eine Karte (110) enthalten ist.

2. Verfahren nach Anspruch 1, bei dem der Schritt (b) das Einbringen (S106) des Kartenträgers in ein Kuvert (122) umfasst.

3. Verfahren nach Anspruch 2, bei dem das Kuvert (122) ein Fenster aufweist.

4. Verfahren nach Anspruch 2 oder 3, bei dem das Kuvert (122) ein durch einen Transponder auslesbares Speicherelement aufweist.

5. Verfahren nach Anspruch 1, bei dem der Schritt (b) das Falzen des Kartenträgers und das Verschweißen desselben an dessen Rändern umfasst.

6. Verfahren nach Anspruch 5, bei dem der Kartenträger ein über einen Transponder auslesbares Speicherelement aufweist.

7. Verfahren gemäß einem der Ansprüche 1 bis 6, bei dem im Schritt (c) ein erstes Signal erzeugt wird, wenn durch die Leseoperation eine Information von der Karte (110) ausgelesen wird, und bei dem im Schritt (c) ein zweites Signal erzeugt wird, wenn durch die Leseoperation keine Information von der Karte (110) ausgelesen wird, wobei das Verfahren ferner folgende Schritte umfasst:
(d) falls im Schritt (c) das erste Signal erzeugt wird, Weiterleiten (S112) des kuvertierten Kartenträgers an eine nachfolgende Station (S128) zur Handhabung desselben; und
(e) falls im Schritt (c) das zweite Signal erzeugt wird, Entfernen (S114) des kuvertierten Kartenträgers aus dem Handhabungsprozess.

8. Verfahren gemäß einem der Ansprüche 1 bis 6, bei dem im Schritt (c) vorbestimmte Informationen von dem Speicherelement gelesen werden, wobei das Verfahren ferner folgende Schritte umfasst:
(d) Vergleichen (S118) der im Schritt (c) ausgelesenen Informationen mit entsprechenden, dem Kartenträger (104) zugeordneten Informationen;
(e) falls die im Schritt (d) verglichenen Informationen übereinstimmen, Weiterleiten (S122) des kuvertierten Kartenträgers an eine nachfolgende Station (128) zur Handhabung desselben; und
(f) falls die im Schritt (d) verglichenen Informationen nicht übereinstimmen, Entfernen (S124) des kuvertierten Kartenträgers aus dem Handhabungsprozess.

9. Verfahren gemäß Anspruch 8, bei dem die dem Kartenträger (104) zugeordneten Informationen von dem Kuvert oder von dem Kartenträger (104) erfasst werden.

10. Verfahren gemäß Anspruch 9, bei dem die Informationen durch eine optische Erfassung von dem Kuvert oder von dem Kartenträger durch das Fenster in dem Kuvert (122) erfasst werden.

11. Verfahren gemäß Anspruch 10, bei dem die zu vergleichenden Informationen Adressinformationen umfassen, die durch eine OCR-Lesung erfasst werden.

12. Verfahren gemäß Anspruch 8, bei dem die Informationen betreffend den Kartenträger (104) von einer Datenbank (114) erhalten werden.

13. Verfahren gemäß einem der Ansprüche 1 bis 12, bei dem zusätzliche Informationen gespeichert werden, die anzeigen, welche Karten (110) kuvertiert wurden.

14. Verfahren gemäß Anspruch 13, bei dem basierend auf den zusätzlichen Informationen ein Bericht über die kuvertierten Karten (110) erzeugt wird.

15. Verfahren gemäß einem der Ansprüche 1 bis 14, bei dem im Schritt (c) ferner vorbestimmte Informationen von dem Speicherelement gelesen wird, wobei das Verfahren ferner folgende Schritte umfasst:
Bereitstellen der gelesenen Informationen, und
Bedrucken des Kuverts bzw. des gefalzten und verschweißten Kartenträgers mit den bereitgestellten Informationen.

16. Verfahren nach Anspruch 15, bei dem die bereitgestellten Informationen die für den Versand erforderlichen Adressinformationen, andere dem Empfänger zugeordnete Informationen oder vorbestimmte Werbeinformationen umfassen.

17. Verfahren nach Anspruch 15 oder 16, bei dem die bereitgestellten Informationen auf der Karte gespeichert sind, oder bei dem die vorbestimmten Informationen eine Identifikationsmarkierung der Karte umfassen, mit der auf eine Datenbank zugegriffen wird, in der die Informationen gespeichert sind.

18. Verfahren nach einem der Ansprüche 1 bis 17, bei dem die Karte eine Kunststoffkarte ist.

19. Vorrichtung zum Handhaben von Karten mit einer Mehrzahl von Handhabungsstationen, die die Karten durchlaufen, wobei die Karten ein über einen Transponder kontaktfrei auslesbares Speicherelement aufweisen, mit
einer Appliziereinrichtung (112), um eine Karte (110) und einen Kartenträger (104) zusammenzuführen, zu verbinden und auszugeben;
einer Einrichtung (120), um den Kartenträger (104) zu kuvertieren;
einer Leseeinrichtung (124), um eine Leseoperation bezüglich des kuvertierten Kartenträgers durchzuführen; und
einer Steuerungseinrichtung, die basierend auf einem von dem kuvertierten Kartenträger empfangenen Signal bestimmt, ob in dem Kuvert (122) eine Karte (110) enthalten ist.

20. Vorrichtung nach Anspruch 19, bei der die Einrichtung (120) zum Kuvertieren des Kartenträgers (104) eine Kuvertiereinrichtung umfasst, um den Kartenträger in ein Kuvert (122) einzubringen.

21. Vorrichtung nach Anspruch 20, bei der das Kuvert (122) ein Fenster aufweist.

22. Vorrichtung nach Anspruch 20 oder 21, bei der das Kuvert (122) ein durch einen Transponder auslesbares Speicherelement aufweist.

23. Vorrichtung nach Anspruch 19, bei der der die Einrichtung (120) zum Kuvertieren des Kartenträgers (104) eine Falzeinrichtung und eine Verschweißeinrichtung umfasst, um den Kartenträger zu Falzen und an dessen Rändern zu verschweißen.

24. Vorrichtung nach Anspruch 23, bei der der Kartenträger ein über einen Transponder auslesbares Speicherelement aufweist.

25. Vorrichtung gemäß einem der Ansprüche 19 bis 24, bei der die Steuerungseinrichtung so eingerichtet ist, daß sie ein erstes Signal erzeugt, wenn die Leseeinrichtung eine Information von der Karte (110) empfängt, und ein zweites Signal erzeugt, wenn die Leseeinrichtung keine Information von der Karte (110) empfängt,
wobei die Steuerungseinrichtung so eingerichtet ist, daß sie in Reaktion auf das erste Signal den kuvertierten Kartenträger an eine nachfolgende Station (128) zur Handhabung desselben weiterleitet; und
wobei die Steuerung so eingerichtet ist, daß sie in Reaktion auf das zweite Signal den kuvertierten Kartenträger aus dem Handhabungsprozess entfernt.

26. Vorrichtung gemäß einem der Ansprüche 19 bis 25, bei der die Leseeinrichtung so eingerichtet ist, daß sie vorbestimmte Informationen von dem Speicherelement liest, wobei die Steuerungseinrichtung wirksam ist, um
die ausgelesenen Informationen mit entsprechenden, dem Kartenträger (104) zugeordneten Informationen zu vergleichen;
den kuvertierten Kartenträger an eine nachfolgende Station (128) zur Handhabung desselben weiterzuleiten, falls die verglichenen Informationen übereinstimmen; und
den kuvertierten Kartenträger aus dem Handhabungsprozess zu entfernen, falls die verglichenen Informationen nicht übereinstimmen.

27. Vorrichtung gemäß Anspruch 26 mit einer Einrichtung, um die dem Kartenträger (104) zugeordneten Informationen von dem Kuvert oder dem Kartenträger (104) zu erfassen.

28. Vorrichtung gemäß Anspruch 27, bei der die Erfassungseinrichtung eine optische Erfassungseinrichtung ist, die eingerichet ist, die Informationen von dem Kuvert oder von dem Kartenträger durch das Fenster in dem Kuvert (122) zu lesen.

29. Vorrichtung gemäß Anspruch 28, bei der die zu vergleichenden Informationen Adressinformationen umfassen, wobei die optische Erfassungseinrichtung ein OCR-Leser ist.

30. Vorrichtung gemäß Anspruch 27 mit einer Datenbank (114), die die Informationen betreffend den Kartenträger (104) enthält.

31. Vorrichtung gemäß einem der Ansprüche 19 bis 30, bei der die Steuerungseinrichtung zusätzlich Informationen speichert, die anzeigen, welche Karten (110) kuvertiert wurden.

32. Vorrichtung gemäß Anspruch 31, bei der die Steuerungseinrichtung eingerichtet ist, basierend auf den zusätzlichen Informationen einen Bericht über die kuvertierten Karten (110) zu erzeugen.

33. Vorrichtung gemäß einem der Ansprüche 19 bis 32, bei der die Leseeinrichtung ferner eingerichtet ist, vorbestimmte Informationen von dem Speicherelement zulesen, wobei die Vorrichtung ferner einen Drucker umfasst, um das Kuvert oder den gefalzten und verschweißten Kartenträger mit den Informationen zu bedrucken.

34. Vorrichtung nach Anspruch 33, bei der die bereitgestellten Informationen die für den Versand erforderlichen Adressinformationen, andere dem Empfänger zugeordnete Informationen oder vorbestimmte Werbeinformationen umfassen.

35. Vorrichtung nach Anspruch 33 oder 34, bei der die bereitgestellten Informationen auf der Karte gespeichert sind, oder bei der die vorbestimmten Informationen eine Identifikationsmarkierung der Karte umfassen, mit der auf eine Datenbank zugegriffen wird, in der die Informationen gespeichert sind.

36. Vorrichtung nach einem der Ansprüche 19 bis 35, bei der die Karte eine Kunststoffkarte ist.

## Claims

1. A method of handling cards, the cards comprising a memory element that may be read out in a contactless manner via a transponder, and passing through a plurality of handling stations, the method comprising:
(a) bringing together and joining (S104) a card (110) and a card carrier (104);
(b) inserting the card carrier (122) into an envelope (S106); and
(c) performing (S108) a reading operation with regard to the card carrier enveloped in step (b) so as to determine, on the basis of a signal received from the card carrier enveloped, whether a card (110) is contained in the envelope (122).

2. The method as claimed in claim 1, wherein step (b) includes introducing (S106) the card carrier into an envelope (122).

3. The method as claimed in claim 2, wherein the envelope (122) comprises a window.

4. The method as claimed in claims 2 or 3, wherein the envelope (122) comprises a memory element that may be read out by a transponder.

5. The method as claimed in claim 1, wherein step (b) includes folding the card carrier and sealing same at its edges.

6. The method as claimed in claim 5, wherein the card carrier comprises a memory element that may be read out via a transponder.

7. The method as claimed in any of claims 1 to 6, wherein a first signal is generated in step (c) when a piece of information is read out from the card (110) by the reading operation, and wherein a second signal is generated in step (c) when no information is read out from the card (110) by the reading operation, the method further comprising:
(d) if the first signal is generated in step (c), passing on (S112) the enveloped card carrier to a subsequent station (S128) for handling same; and
(e) if the second signal is generated in step (c), (S114) the enveloped card carrier from the handling process.

8. The method as claimed in any of claims 1 to 6, wherein in step (c), predetermined information is read from the memory element, the method further comprising:
(d) comparing (S118) the information read out in step (c) with corresponding information associated with the card carrier (104);
(e) if the information compared in step (d) matches, passing on (S122) the enveloped card carrier to a subsequent station (128) for handling same; and
(f) if the information compared in step (d) does not match, removing (S124) the enveloped card carrier from the handling process.

9. The method as claimed in claim 8, wherein the information associated with the card carrier (104) is detected from the envelope or from the card carrier (104).

10. The method as claimed in claim 9, wherein, by means of optical detection, the information is detected from the envelope or from the card carrier through the window in the envelope (122).

11. The method as claimed in claim 10, wherein the information to be compared includes address information detected by an OCR read.

12. The method as claimed in claim 8, wherein the information relating to the card carrier (104) is obtained from a database (114).

13. The method as claimed in any of claims 1 to 12, wherein additional information is stored which indicates which cards (110) have been inserted into envelopes.

14. The method as claimed in claim 13, wherein a report about the cards (110) which have been inserted into envelopes is created on the basis of the additional information.

15. The method as claimed in any of claims 1 to 14, wherein in step (c), predetermined information is additionally read from the memory element, the method further comprising:
providing the information read, and
printing the information provided onto the envelope or onto the card carrier which has been folded and sealed.

16. The method as claimed in claim 15, wherein the information provided includes the address information required for shipment, other information associated with the recipient, or predetermined advertising information.

17. The method as claimed in claims 15 or 16, wherein the information provided is stored on the card, or wherein the predetermined information includes an identification mark of the card with which a database, wherein the information is stored, is accessed.

18. The method as claimed in any of claims 1 to 17, wherein the card is a plastic card.

19. An apparatus for handling cards with a plurality of handling stations that the cards pass through, the cards comprising a memory element which may be read out in a contactless manner via a transponder, the apparatus comprising:
an applying means (112) for bringing together, joining and outputting a card (110) and a card carrier (104);
a means (120) for inserting the card carrier (104) into an envelope;
a reading means (124) for performing a reading operation with regard to the card carrier enveloped; and
a control means determining, on the basis of a signal received from the card carrier enveloped, whether a card (110) is contained in the envelope (122).

20. The apparatus as claimed in claim 19, wherein the means (120) for inserting the card carrier (104) includes an enveloping means for introducing the card carrier into an envelope (122).

21. The apparatus as claimed in claim 20, wherein the envelope (122) comprises a window.

22. The apparatus as claimed in claims 20 or 21, wherein the envelope (122) comprises a memory element that may be read out by a transponder.

23. The apparatus as claimed in claim 19, wherein the means (120) for inserting the card carrier (104) includes a folding means and a sealing means for folding the card carrier and sealing same at its edges.

24. The apparatus as claimed in claim 23, wherein the card carrier comprises a memory element that may be read out via a transponder.

25. The apparatus as claimed in any of claims 19 to 24, wherein the control means is implemented so that it generates a first signal when the reading means receives a piece of information from the card (110) and generates a second signal when the reading means receives no information from the card (110),
wherein the control means is implemented so that it passes on the card carrier enveloped to a subsequent station (128) for handling same in response to the first signal; and
wherein the control means is implemented so that it removes the card carrier enveloped from the handling process in response to the second signal.

26. The apparatus as claimed in any of claims 19 to 25, wherein the reading means is implemented so that it reads predetermined information from the memory element, the control means being operative to
compare the information read out with corresponding information associated with the card carrier (104);
pass on the card carrier enveloped to a subsequent station (128) for handling same if the information compared matches; and
remove the card carrier enveloped from the handling process if the information compared does not match.

27. The apparatus as claimed in claim 26, comprising a means for detecting the information associated with the card carrier (104) from the envelope or the card carrier (104).

28. The apparatus as claimed in claim 27, wherein the detection means is an optical detection means which is implemented so that it reads the information from the envelope or from the card carrier through the window in the envelope (122).

29. The apparatus as claimed in claim 28, wherein the information to be compared includes address information, the optical detection means being an OCR reader.

30. The apparatus as claimed in claim 27, comprising a database (114) containing the information relating to the card carrier (104).

31. The apparatus as claimed in any of claims 19 to 30, wherein the control means additionally stores information which indicates which cards (110) have been inserted into envelopes.

32. The apparatus as claimed in claim 31, wherein the control means is implemented to generate a report about the cards (110) inserted into envelopes on the basis of the additional information.

33. The apparatus as claimed in any of claims 19 to 32, wherein the reading means is further implemented to read predetermined information from the memory element, the apparatus further including a printer for printing information on the envelope or the card carrier which has been folded and sealed.

34. The apparatus as claimed in claim 33, wherein the information provided includes the address information required for shipment, other information associated with the recipient, or predetermined advertising information.

35. The apparatus as claimed in claims 33 or 34, wherein the information provided is stored on the card, or wherein the predetermined information includes an identification mark of the card with which a database, wherein the information is stored, is accessed.

36. The apparatus as claimed in any of claims 19 to 35, wherein the card is a plastic card.

## Revendications

1. Procédé pour manipuler des cartes, les cartes présentant un élément de mémoire pouvant être lu sans contact par l'intermédiaire d'un transpondeur et passant par une pluralité de postes de manipulation, aux étapes suivantes consistant à :
(a) réunir et assembler (S104) une carte (110) et un support de carte (104) ;
(b) mettre sous enveloppe (S106) le support de carte (122) ; et
(c) réaliser (S108) une opération de lecture en ce qui concerne le support de carte mis sous enveloppe à l'étape (b), afin de déterminer, sur base d'un signal reçu du support de carte mis sous enveloppe, si une carte (110) est contenue dans l'enveloppe (122).

2. Procédé selon la revendication 1, dans lequel l'étape (b) comprend l'introduction (S106) du support de carte dans une enveloppe (122).

3. Procédé selon la revendication 2, dans lequel l'enveloppe (122) présente une fenêtre.

4. Procédé selon la revendication 2 ou 3, dans lequel l'enveloppe (122) présente un élément de mémoire pouvant être lu par un transpondeur.

5. Procédé selon la revendication 1, dans lequel l'étape (b) comprend le pliage du support de carte et la soudure de celui-ci sur ses bords.

6. Procédé selon la revendication 5, dans lequel le support de carte présente un élément de mémoire pouvant être lu par l'intermédiaire d'un transpondeur.

7. Procédé selon l'une des revendications 1 à 6, dans lequel est généré, à l'étape (c), un premier signal lorsque par l'opération de lecture est lue une information de la carte (110), et dans lequel est généré, à l'étape (c), un deuxième signal lorsque par l'opération de lecture n'est lue aucune information de la carte (110), le procédé comprenant, en outre, les étapes suivantes consistant à :
(d) lorsqu'à l'étape (c) est généré le premier signal, transmettre (S112) le support de carte mis sous enveloppe à un poste suivant (S 128), pour la manipulation de ce dernier ;
(e) lorsqu'à l'étape (c) est généré le deuxième signal, éliminer (S114) le support de carte mis sous enveloppe du processus de manipulation.

8. Procédé selon l'une des revendications 1 à 6, dans lequel sont lues, à l'étape (c), des informations prédéterminées de l'élément de mémoire, le procédé comprenant, par ailleurs, les étapes suivantes consistant à :
(d) comparer (S118) les informations lues à l'étape (c) avec des informations correspondantes associées au support de carte (104) ;
(e) si les informations comparées à l'étape (d) coïncident, transmettre (S122) le support de carte mis sous enveloppe à un poste suivant (128), pour manipulation de ce dernier ; et
(f) si les informations comparées à l'étape (d) ne coïncident pas, éliminer (S124) le support de carte mis sous enveloppe du processus de manipulation.

9. Procédé selon la revendication 8, dans lequel les informations associées au support de carte (104) sont détectées de l'enveloppe ou du support de carte (104).

10. Procédé selon la revendication 9, dans lequel les informations sont détectées par une détection optique de l'enveloppe ou du support de carte à travers la fenêtre dans l'enveloppe (122).

11. Procédé selon la revendication 10, dans lequel les informations à comparer incluent des informations d'adresse qui sont détectées par une lecture ROC.

12. Procédé selon la revendication 8, dans lequel les informations relatives au support de carte (104) sont reçues d'une banque de données (114).

13. Procédé selon l'une des revendications 1 à 12, dans lequel sont mémorisées des informations supplémentaires qui indiquent les cartes (110) qui ont été mises sous enveloppe.

14. Procédé selon la revendication 13, dans lequel est généré, sur base des informations supplémentaires, un rapport sur les cartes mises sous enveloppe (110).

15. Procédé selon l'une des revendications 1 à 14, dans lequel sont lues, à l'étape (c), par ailleurs des informations prédéterminées de l'élément de mémoire, le procédé comprenant, par ailleurs, les étapes suivantes consistant à :
préparer les informations lues, et
imprimer sur l'enveloppe ou le support de carte plié et soudé les informations préparées.

16. Procédé selon la revendication 15, dans lequel les informations préparées incluent les informations d'adresse nécessaires pour l'expédition, d'autres informations associées au destinataire ou des informations publicitaires prédéterminées.

17. Procédé selon la revendication 15 ou 16, dans lequel les informations préparées sont mémorisées sur la carte, ou dans lequel les informations prédéterminées incluent un repère d'identification de la carte à l'aide duquel il est accédé à une banque de données dans laquelle sont mémorisées les informations.

18. Procédé selon l'une des revendications 1 à 17, dans lequel la carte est une carte plastique.

19. dispositif pour manipuler des cartes, avec une pluralité de postes de manipulation par lesquels passent les cartes, les cartes présentant un élément de mémoire pouvant être lu sans contact par l'intermédiaire d'un transpondeur, avec
un dispositif applicateur (112) destiné à réunir, assembler et sortir une carte (110) et un support de carte (104) ;
un dispositif (120) destiné à mettre sous enveloppe le support de carte (104) ;
un dispositif de lecture (124) destiné à effectuer une opération de lecture en ce qui concerne le support de carte mis sous enveloppe ; et
un dispositif de commande qui, sur base d'un signal reçu du support de carte mis sous enveloppe, détermine si une carte (110) est contenue dans l'enveloppe (122).

20. Dispositif selon la revendication 19, dans lequel l'aménagement (120) de mise sous enveloppe du support de carte (104) comprend un dispositif de mise sous enveloppe, pour introduire le support de carte dans une enveloppe (122).

21. Dispositif selon la revendication 20, dans lequel l'enveloppe (122) présente une fenêtre.

22. Dispositif selon la revendication 20 ou 21, dans lequel l'enveloppe (122) présente un élément de mémoire pouvant être lu par un transpondeur.

23. Dispositif selon la revendication 19, dans lequel l'aménagement (120) de mise sous enveloppe du support de carte (104) présente un dispositif de pliage et un dispositif de soudure, pour plier le support de carte et le souder sur ses bords.

24. Dispositif selon la revendication 23, dans lequel le support de carte présente un élément de mémoire pouvant être lu par l'intermédiaire d'un transpondeur.

25. Dispositif selon l'une des revendications 19 à 24, dans lequel l'unité de commande est organisée de sorte qu'elle génère un premier signal lorsque le dispositif de lecture reçoit une information de la carte (110) et un deuxième signal lorsque le dispositif de lecture ne reçoit pas d'information de la carte (110),
l'unité de commande étant organisée de sorte qu'elle transmet, en réaction au premier signal, le support de carte mis sous enveloppe à un poste suivant (128) pour la manipulation de ce dernier ; et
la commande étant organisée de sorte que, en réaction au deuxième signal, elle élimine le support de carte mis sous enveloppe du processus de manipulation.

26. Dispositif selon l'une des revendications 19 à 25, dans lequel le dispositif de lecture est organisé de sorte qu'il lise des informations prédéterminées de l'élément de mémoire, l'unité de commande étant active pour
comparer les informations lues avec des informations correspondantes associées au support de carte (104) ;
pour transmettre le support de carte mis sous enveloppe à un poste suivant (128) pour la manipulation de ce dernier si les informations comparées coïncident ; et
pour éliminer le support de carte mis sous enveloppe du processus de manipulation si les informations comparées ne coïncident pas.

27. Dispositif selon la revendication 26, avec un dispositif destiné à détecter les informations associées au support de carte (104) de l'enveloppe ou du support de carte (104).

28. Dispositif selon la revendication 27, dans lequel le dispositif de détection est un dispositif de détection optique qui est organisé pour lire les informations de l'enveloppe ou du support de carte à travers la fenêtre dans l'enveloppe (122).

29. Dispositif selon la revendication 28, dans lequel les informations à comparer incluent des informations d'adresse, le dispositif de détection optique étant un lecteur ROC.

30. Dispositif selon la revendication 27, avec une banque de données (114) qui contient les informations relatives au support de carte (104).

31. Dispositif selon l'une des revendications 19 à 30, dans lequel le dispositif de commande mémorise en outre des informations qui indiquent les cartes (110) qui ont été mises sous enveloppe.

32. Dispositif selon la revendication 31, dans lequel le dispositif de commande est organisé pour générer, sur base des informations supplémentaires, un rapport sur les cartes mises sous enveloppe (110).

33. Dispositif selon l'une des revendications 19 à 32, dans lequel le dispositif de lecture est, par ailleurs, organisé pour lire des informations prédéterminées de l'élément de mémoire, le dispositif comprenant, par ailleurs, une imprimante pour imprimer les informations sur l'enveloppe ou le support de carte plié et soudé.

34. Dispositif selon la revendication 33, dans lequel les informations préparées incluent les informations d'adresse nécessaires pour l'expédition, d'autres informations associées au destinataire ou des informations publicitaires prédéterminées.

35. Dispositif selon la revendication 33 ou 34, dans lequel les informations préparées sont mémorisées sur la carte, ou dans lequel les informations prédéterminées comprennent un repère d'identification de la carte par lequel il est accédé à une banque de données dans laquelle sont mémorisées les informations.

36. Dispositif selon l'une des revendications 19 à 35, dans lequel la carte est une carte plastique.
